# EUROPÄISCHE PATENTANMELDUNG

(11) **EP 0 644 136 A1**
(43) Veröffentlichungstag der Anmeldung: **22.03.1995**
(21) Anmeldenummer: 93890178.2
(22) Anmeldetag: 10.09.1993
(51) Int. Cl.: B65G 65/44

(54) **Austragsvorrichtung zum dosierten Austrag pulvrigen oder körnigen Gutes**

(71) Anmelder: Hemetsberger, Helmut, A-4690 Schwanenstadt (AT)
(72) Erfinder: Hemetsberger, Helmut, A-4690 Schwanenstadt (AT)
(74) Vertreter: Hübscher, Heiner, Dipl.-Ing.

(57) **Zusammenfassung**

Eine Austragsvorrichtung (3) zum dosierten Austrag pulvrigen oder körnigen Gutes, umfaßt eine über einen Anschlußtrichter (4) an eine untere Auslauföffnung (2) eines Gutbehälters (1) ansetzbare, schräg abwärts führende Austragsrinne (5).

Um mit wenig Aufwand einen gut dosierbaren Austrag zu erreichen, ist die Austragsrinne (5) mit einem Rüttler (7) versehen, weist der Anschlußtrichter (4) ansatzseitig eine schwingungselastische Anschlußmanschette (6) auf und sitzt in der Austragsrinne (5) ein über einen Stelltrieb (11) betätigbarer Dosierschieber (10), der aus einer Offenstellung zum Grobdosieren vor dem Erreichen einer Schließstellung in eine Zwischenstellung zum Feindosieren verschiebbar ist.

## Beschreibung

Die Erfindung bezieht sich auf eine Austragsvorrichtung zum dosierten Austrag pulvrigen oder körnigen Gutes, mit einer über einen Anschlußtrichter an eine untere Auslauföffnung eines Gutbehälters ansetzbaren, schräg abwärts führenden Austragsrinne.

Bekannte Austragsvorrichtungen mit Austragsrinnen dienen im wesentlichen als Auslaufrutschen und können nur bei Gutbehältern eingesetzt werden, die über eine verschlußbestückte Auslauföffnung verfügen, welcher Auslaufverschluß des Behälters auch zum Dosieren des Austrages selbst heranzuziehen ist. Diese Austragsvorrichtungen erlauben daher von vornherein nur ein sehr beschränktes Grobdosieren des Gutaustrages, wobei durch ein Verklumpen des Gutes, Brückenbildungen im Behälter u. dgl. Austragsstörungen befürchtet werden müssen, so daß sich solche Austragsvorrichtungen für ein Abgeben bestimmter Gutmengen, wie das beispielsweise bei einem Zutatenautomaten einer Teigbereitungsmaschine od. dgl. erforderlich ist, keinesfalls eignen, da es hier in Abhängigkeit von den jeweiligen Rezepturen auf ein exaktes Zudosieren verschiedenster Zutaten ankommt. Um diese genaue Gutdosierung zu erreichen, müssen bisher Austragsvorrichtungen mit ansteuerbaren Austragsförderern, insbesondere Schneckenförderern, eingesetzt werden, was bei der Mehrzahl der Zutatenbehälter und der Notwendigkeit, jeden Behälter mit einer eigenen Austragsvorrichtung ausstatten zu müssen, zu einem beträchtlichen Bau- und Konstruktionsaufwand führt.

Der Erfindung liegt daher die Aufgabe zugrunde, diese Mängel zu beseitigen und eine Austragsvorrichtung der eingangs geschilderten Art zu schaffen, die mit vergleichsweise einfachen konstruktiven Mitteln einen ausreichend genau dosierbaren Austrag gewährleistet.

Die Erfindung löst diese Aufgabe dadurch, daß die Austragsrinne mit einem Rüttler versehen ist, daß der Anschlußtrichter ansatzseitig eine schwingungselastische Anschlußmanschette aufweist und daß in der Austragrinne ein über einen Stelltrieb betätigbarer Dosierschieber sitzt, der aus einer Offenstellung zum Grobdosieren vor dem Erreichen einer Schließstellung in eine Zwischenstellung zum Feindosieren verschiebbar ist. Durch den Rüttler kann die Austragsrinne in Schwingungen versetzt werden, so daß eine Art Schwingförderer mit gleichmäßigem Fördereffekt für das pulvrige oder körnige Gut entsteht. Die schwingungselastische Anschlußmanschette verhindert dabei eine Übertragung der Schwingungen auf den Gutbehälter, welcher Gutbehälter beliebig ausgebildet sein kann und auch keinen Auslaufverschluß für seine Auslauföffnung benötigt. Zum Verschließen bzw. dosierten Abgeben des Gutes ist in der Austragsrinne ein Dosierschieber vorgesehen, der über einen entsprechenden Stelltrieb, beispielsweise einen elektropneumatischen Zylindertrieb, neben der reinen Offenstellung in eine Zwischenstellung verschiebbar ist, in der nur mehr ein Teil des Durchflußquerschnittes, beispielsweise die Hälfte oder weniger, für den Gutaustrag freigegeben ist, was eine feindosierbare Mengenabgabe ermöglicht. Wird nun der Stelltrieb in Abhängigkeit von einer die Abgabemenge erfassenden Meßeinrichtung, insbesondere einer elektronischen Waage, angesteuert, kann daher bis zu einem bestimmten Grenzwert vor dem Erreichen der abzugebenden Menge der Dosierschieber in seiner Offenstellung gehalten sein, so daß der Hauptanteil der abzugebenden Menge möglichst schnell ausläuft, worauf dann der Dosierschieber von der Offenstellung in die Zwischenstellung gebracht wird, wodurch die auslaufende Gutmenge genau erfaßt und der Dosierschieber exakt zu dem für die Abgabe der dosierten Gutmenge erforderlichen Zeitpunkt geschlossen werden kann. Gleichzeitig mit dem Öffnen des Dosierschiebers zum Abgeben des Gutes wird auch der Rüttler eingeschaltet, um das Gut auszufördern, und mit dem Schließen des Dosierschiebers schaltet auch der Rüttler wieder ab. Es entsteht eine überaus einfache, robuste und wartungsfreie Austragsvorrichtung, die ein für die meisten Dosieraufgaben ausreichend genaues Gutaustragen erlaubt.

Ist dem Dosierschieber im Übergangsbereich zwischen Anschlußtrichter und Austragsrinne ein in verschiedenen Öffnungsstellungen fixierbarer Voreinstellschieber vorgeordnet, läßt sich der Auslaufquerschnitt der Austragsrinne an die jeweilige Beschaffenheit und Auslaufeigenschaft des Gutes anpassen, wodurch die Dosiergenauigkeit verbessert wird.

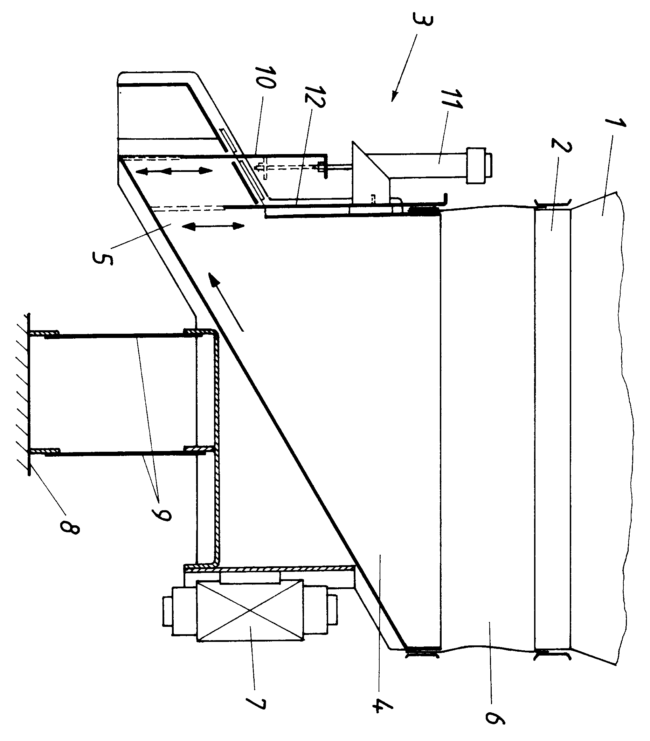

In der Zeichnung ist eine erfindungsgemäße Austragsvorrichtung in einem schematischen Vertikalschnitt näher veranschaulicht.

Um pulvriges oder körniges Gut dosiert austragen zu können, ist für einen Gutbehälter 1, der eine untere Auslauföffnung 2 aufweist, eine Austragsvorrichtung 3 vorgesehen, die aus einer in einen Anschlußtrichter 4 übergehenden Austragsrinne 5 besteht. Der Anschlußtrichter 4 ist mit einer schwingungselastischen Anschlußmanschette 6 an der Auslauföffnung 2 befestigt und an der Austragsrinne 5 sitzt ein Rüttler 7, wobei zur Abstützung der Austragsvorrichtung 3 an einem nur angedeuteten Tragwerk 8 entsprechende Stützfedern 9 angeordnet sind.

In der Austragsrinne 5 sitzt ein Dosierschieber 10, der über einen Stelltrieb 11 betätigt wird und aus einer Schließstellung in eine Offenstellung zum Grobdosieren und eine Zwischenstellung zum Feindosieren verschiebbar ist. Im Übergangsbereich zwischen Anschlußtrichter 4 und Austragrinne 5 gibt es in Auslaufrichtung vor dem Dosierschieber 10 einen Voreinstellschieber 12, der zur Anpassung des Auslaufquerschnittes an das jeweilige Gut händisch in verschiedene Öffnungsstellungen gebracht und in diesen fixiert werden kann.

Soll nun Gut aus dem Gutbehälter 1 durch die Austragsvorrichtung 3 abgegeben werden, wird der Rüttler 7 eingeschaltet, damit der Gutfluß durch die Vibration der Austragsvorrichtung 3 angeregt wird, wobei die Anschlußmanschette 6 und die Stützfedern 9 eine Übertragung der Schwingungen auf den Behälter 1 und das Tragwerk 8 verhindern. Außerdem bringt der Stelltrieb 11, der über eine entsprechende Steuerungseinrichtung angesteuert wird, den Dosierschieber 10 in seine Offenstellung, so daß das Gut anfangs schnell auslaufen kann. Wird über eine nicht weiter dargestellte Waage die auslaufende Gutmenge gemessen, kann knapp vor dem Erreichen der abzugebenden Gutmenge der Dosierschieber 10 über den Stelltrieb 11 in eine Zwischenstellung verstellt werden, in der nur mehr ein Teil des Öffnungsquerschnittes freigegeben ist und das Gut daher langsam ausfließt, und eine Feindosierung der abgegebenen Menge ist möglich. Zeigt die Waage das Erreichen der gewünschten Menge an, drückt der Stelltrieb 11 den Dosierschieber 10 in seine Schließstellung und schaltet den Rüttler 7 aus.

## Patentansprüche

1. Austragsvorrichtung (3) zum dosierten Austrag pulvrigen oder körnigen Gutes, mit einer über einen Anschlußtrichter (4) an eine untere Auslauföffnung (2) eines Gutbehälters (1) ansetzbaren, schräg abwärts führenden Austragsrinne (5), dadurch gekennzeichnet, daß die Austragsrinne (5) mit einem Rüttler (7) versehen ist, daß der Anschlußtrichter (4) ansatzseitig eine schwingungselastische Anschlußmanschette (6) aufweist und daß in der Austragrinne (5) ein über einen Stelltrieb (11) betätigbarer Dosierschieber (10) sitzt, der aus einer Offenstellung zum Grobdosieren vor dem Erreichen einer Schließstellung in eine Zwischenstellung zum Feindosieren verschiebbar ist.

2. Austragsvorrichtung nach Anspruch 1, dadurch gekennzeichnet, daß dem Dosierschieber (10) im Übergangsbereich zwischen Anschlußtrichter (4) und Austragsrinne (5) ein in verschiedenen Öffnungsstellungen fixierbarer Voreinstellschieber (12) vorgeordnet ist.
